Europäisches Patentamt

(19) European Patent Office

Office européen des brevets

(11) Numéro de publication: **0 220 088 B1**

(12) **FASCICULE DE BREVET EUROPEEN**

(45) Date de publication du fascicule du brevet: **25.04.90**

(51) Int. Cl.⁵: **F 16 L 15/04, E 21 B 17/042**

(21) Numéro de dépôt: **86402004.5**

(22) Date de dépôt: **12.09.86**

(54) **Joint fileté pour tubes d'acier comportant un dispositif d'étanchéité localisé au niveau des filetages.**

(30) Priorité: **12.09.85 FR 8513537**

(43) Date de publication de la demande:
**29.04.87 Bulletin 87/18**

(45) Mention de la délivrance du brevet:
**25.04.90 Bulletin 90/17**

(84) Etats contractants désignés:
**AT BE DE GB IT NL SE**

(56) Documents cités:
**CH-A- 557 499
FR-A-2 201 741
FR-A-2 524 962
US-A-2 631 871
US-A-3 047 316
US-A-3 850 461**

(73) Titulaire: **VALLOUREC
130, rue de Silly
F-92100 Boulogne-Billancourt (FR)**

(72) Inventeur: **Bounie, Paul
12, rue Ampère
F-59620 Aulnoye/Aymeries (FR)**
Inventeur: **Plaquin, Bernard
15, Rond Point des Acacias
F-59620 Aulnoye (FR)**

(74) Mandataire: **Nony, Michel et al
Cabinet NONY & CIE, 29, rue Cambacérès
F-75008 Paris (FR)**

Courier Press, Leamington Spa, England.

## Description

La présente invention est relative à un joint fileté pour tubes d'acier, utilisable en particulier dans l'industrie pétrolière, qui comporte un dispositif d'étanchéité localisé au niveau des filetages.

On sait que les joints pour tubes utilisés dans l'industrie pétrolière, doivent présenter un certain nombre de caractéristiques difficiles à concilier et qui consistent notamment à ce que le joint, tout en étant facile à usiner et peu sensible aux endommagements, permette d'assurer une étanchéité parfaite vis-à-vis de très fortes pressions qui s'exercent soit à l'intérieur, soit à l'extérieur du joint, et ceci même dans l'hypothèse où le joint est soumis à des flexions ou à d'importantes tractions ou compressions axiales.

Il est également nécessaire que les éléments de joint puissent être interchangés sans que cela ait une influence néfaste sur la qualité de l'étanchéité qui est obtenue lors du nouveau vissage du joint avec d'autres éléments.

Les joints filetés actuellement utilisés dans l'industrie pétrolière, comportent tout d'abord des filetages mâles et femelles qui sont le plus souvent coniques (mais qui peuvent être également cylindriques) et qui assurent le maintien mécanique des deux éléments du tube l'un dans l'autre en supportant notamment les tractions axiales qui s'exercent sur le joint.

Dans la plupart des cas, les joints connus comportent aussi des butées dites de limitation de vissage, qui ont pour effet d'immobiliser l'élément mâle par rapport à l'élément femelle dès que le couple de vissage prescrit a été obtenu.

Enfin, les joints de ce type comportent également au moins un couple de surfaces d'étanchéité, qui sont placées de telle manière que lors du vissage du joint, ces surfaces d'étanchéité viennent au contact l'une de l'autre en étant appliquées l'une sur l'autre par une pression suffisante pour obtenir l'étanchéité,

Dans la plupart des cas, celle-ci est obtenue par un contact de type métal-métal, mais dans certains cas, les surfaces d'étanchéité peuvent être associées à des joints en matière plastique tels que par exemple des anneaux de PTFE qui par leur déformation, assurent ou contribuent à l'étanchéité du joint.

Il est en particulier connu, comme cela est illustrée dans le document FR—A—2 524 962, de placer de tels joints annulaires, par exemple en PTFE, dans une gorge pratiquée sur l'élément femelle, soit au niveau des surfaces d'étanchéité, soit même au niveau des filetages, de manière à ce que, lors du vissage du joint, l'élément mâle provoque la déformation plastique du joint qui perd sa forme initiale et s'adapte à la forme de l'élément mâle.

De tels joints plastiques présentent toutefois l'inconvénient d'être difficiles à mettre en place et de devoir dans la pratique être changés chaque fois que le joint est démonté puis remonté.

De tels joints constitués par des anneaux en matière plastique qui sont simplement placés dans une gorge pratiquée dans l'élément femelle, doivent en effet être très fortement déformés pour que l'élément mâle puisse y incruster ses filetages.

Ceci provoque dans la pratique, une destruction du joint en matière plastique, qui devient ainsi inutilisable pour le montage ultérieur des éléments du joint. De surcroît, les contraintes importantes qui sont imposées aux joints en matière plastique lors de cette déformation, provoquent souvent un déplacement de l'anneau de matière plastique qui est ainsi extrait de sa gorge et ne joue plus son rôle.

On connaît également, en particulier pour réaliser l'étanchéité de joints vissés destinés à l'alimentation des immeubles en eau ou en chauffage central, la technique consistant à couvrir le filetage d'un des éléments à l'aide d'une matière thermoplastique qui est déformée lors du vissage pour assurer l'étanchéité.

Ces dispositifs d'étanchéité sont destinés à remplacer l'usage de la filasse ou de ruban PTFE qui sont conventionnellement enroulés sur le filetage de l'élément mâle avant son vissage dans l'élément femelle.

Ils visent à prépositionner une matière thermoplastique au niveau du filetage de ces éléments.

Dans ce cas également, il n'est généralement pas possible de dévisser le joint, de le revisser en interchangeant les éléments et en conservant la qualité de l'étanchéité requise.

La présente invention vise à conférer à des joints pour tubes d'acier, destinés notamment à l'industrie pétrolière, une étanchéité satisfaisante au niveau des filetages, cette étanchéité étant réalisée par un élément en matière plastique que fait corps avec un des éléments du joint, lequel peut être réutilisé de manière fiable au cours des vissages successifs de cet élément.

On sait que pour lui permettre de jouer sa fonction première, qui est de réunir mécaniquement les deux éléments de tubes, chaque filet de l'élément mâle doit s'appliquer sur un filet correspondant de l'élément femelle obligatoirement en la direction axiale et le plus souvent aussi (dans le cas de filetages tronconiques) en la direction radiale.

Il en résulte que l'on peut décomposer le contour des filets d'un joint à l'état serré en, d'une part des surfaces qui sont fortement appliquées les unes sur les autres lors du vissage du joint, et d'autre part des surfaces de l'élément mâle et de l'élément femelle qui se trouvent face à face à une certaine distance l'une de l'autre, et entre lesquelles se situe le jeu existant dans le filetage.

Il résulte de l'existence de cette partie du contour des filetages où les surfaces des éléments mâle et femelle sont écartées les unes des autres, que jusqu'à ce jour, il n'a pas été possible dans la pratique de réaliser une étanchéité satisfaisante au niveau des filetages de ce type de joint.

En effet, l'existence de ce jeu entre les surfaces correspondantes du filetage mâle et du filetage femelle crée un chemin de fuite de forme sensiblement hélicoïdale le long des filetages qui s'opppose à toute étanchéité à ce niveau.

Le présente invention est basée sur la réalisation d'une étanchéité qui se situe le long de ce chemin de fuite hélicoïdal qui peut être ainsi obturé de manière efficace et répétitive.

La présente invention a pour objet un joint fileté entre deux tubes d'acier utilisable en particulier pour l'industrie pétrolière, du type dans lequel l'élément mâle et l'élément femelle sont réunis par des filetages, tandis qu'une partie de la surface du contour de chaque filet est fortement appliquée à l'état vissé sur le filetage de l'autre élément, dans lequel un au moins des éléments du joint comporte sur son filetage, sur une distance axiale correspondant à la longueur d'au moins un pas du filetage, au moins une gorge dont la profondeur est supérieure à la hauteur des filets, et que contient un organe d'étanchéité, caractérisé par le fait que cet organe, qui fait corps avec l'element, est constitué par un garnissage en matière synthétique, conformé avant vissage, dont le volume et la forme correspondent sensiblement au volume et à la forme du jeu qui existerait à l'état vissé entre cet élément du joint et l'autre élément du joint dont les dimensions seraient à la limite des tolérance d'usinage qui permet le plus grand jeu possible du joint à l'état monté, le garnissage en matière synthétique ne subissant aucune déformation permanente notable lors des vissages successifs.

On comprend dans ces conditions, que le joint selon l'invention est constitué par un premier élément de joint qui est muni d'au moins une gorge remplie par un garnissage en matière synthétique conformé avant vissage et dont la forme externe est rigoureusement complémentaire à la forme du contour des filets de l'autre élément après vissage (en tenant compte des compressions qui peuvent se produire lors du vissage du joint), et d'un second élément conventionnel qui est totalement métallique ou comprend également au moins une gorge munie d'un garnissage comme le premier élément.

On comprend également que dans un tel joint, le chemin de fuite hélicoïdal dont l'existence a été rappelée ci-dessus se trouve interrompu de manière étanche au niveau de la ou des gorges, du fait que lorsque le joint est vissé, le garnissage en matière synthétique s'appuie élastiquement sur tout le pourtour du filetage de l'autre élément.

Du fait que la masse de matière synthétique qui est rapportée dans la ou les gorges n'a pas à être mise en forme lors du vissage pour s'adapter à la forme du filetage de l'autre élément, cette matière synthétique subit simplement une légère compression mais ne se trouve pas détériorée et n'a pas à être remplacée à chaque vissage comme cela était connu antérieurement dans le cas où l'on plaçait des anneaux de matière synthétique par exemple en PTFE dans des gorges usinées dans l'élément femelle.

De plus cette matière synthétique en adhérant fortement aux parois de la gorge ou des gorges ne risque pas d'être extraite accidentellement.

Conformément à l'invention, la ou les gorges réalisées dans l'un au moins dese éléments au niveau du filetage présente avantageusement une section en queue d'aronde, de manière à éviter que le garnissage, en matière synthétique n'ait tendance à se dégager de la gorge où il est logé sous l'action des efforts qui lui sont communiqués lors du vissage de l'autre élément.

Dans un mode de réalisation préféré, comportant une gorge unique qui reçoit le garnissage de matière synthétique, celle-ci est réalisée sur l'élément femelle au voisinage de l'extrémité du filetage qui se trouve du côté de l'extrémité de l'élément mâle.

Cependant, une telle gorge peut être également réalisée en un autre point du filetage de l'élément femelle ou encore en un point quelconque du filetage de l'élément mâle, sans que l'on sorte pour cela du cadre de la présente invention.

Le garnissage en matière synthétique qui est contenu dans la ou chaque gorge réalisée dans l'une au moins des éléments peut être obtenu par divers procédés.

Selon un premier procédé conforme à l'invention, on visse sur, ou dans, l'élément qui comporte la ou les gorges, un mandrin comportant un filetage dont les dimensions correspondent aux limites minimales de tolérance de l'élément de joint qui doit être vissé dans, ou sur, l'élément qui comporte la ou les gorges, ou dont les dimensions sont légèrement inférieures à ces limites minimales, lorsque l'on désire obtenir systématiquement une compression du garnissages en matière plastique, et à l'aide d'une pluralité de canaux disposés dans le mandrin, on injecte au niveau de la ou des gorges, la matière synthétique qui, en adhérant à la surface de la gorge correspondante après polymérisation, réalise ainsi le garnissage en matière synthétique conforme à l'invention, qui fait corps avec l'élément de joint considéré.

En variante, on peut utiliser un mandrin dépourvu de canaux que l'on visse dans ou sur l'élément comportant la ou les gorges après avoir appliqué dans celles-ci une masse suffisante de matière synthétique.

Selon un autre procédé comforme à l'invention, on applique dans la ou les gorges réalisées dans un des éléments du joint, une masse suffisante de matière synthétique dont on provoque la polymérisation, puis on usine cette matière synthétique de manière à lui donner une forme qui, compte-tenu de la compression que l'on désire réaliser, correspond exactement au contour du filetage de l'autre élément dont les dimensions correspondent aux tolérances minimales de fabrication pour cet autre élément.

Conformément à l'invention, il est avantageux d'utiliser comme matière synthétique, les élastomères d'uréthane tels que par exemple du polathane XPE ou du Rim 160 à structure micro cellulaire, des polycarbonates, des polyoléfines ou des polyamides.

Dans le but de mieux faire comprendre l'invention, on va en décrire maintenant, à titre d'illustration et dans aucun caractère limitatif, plusieurs modes de réalisation représentés sur le dessin annexé dans lequel:

— La figure 1 représente une vue en coupe d'un joint dont l'élément femelle est muni d'une gorge et d'un garnissage en matière synthétique conforme à l'invention.

— La figure 2 est une vue en coupe à plus grande échelle selon II de la figure 1 montrant les jeux qui existent au niveau des filetages en dehors de garnissages en matière synthétique selon l'invention.

— La figure 3 est une vue en coupe à plus grande échelle de la partie III de la figure 1.

— La figure 4 est une vue schématique en coupe montrant un mode ce réalisation du garnissage en matière synthétique conforme à l'invention.

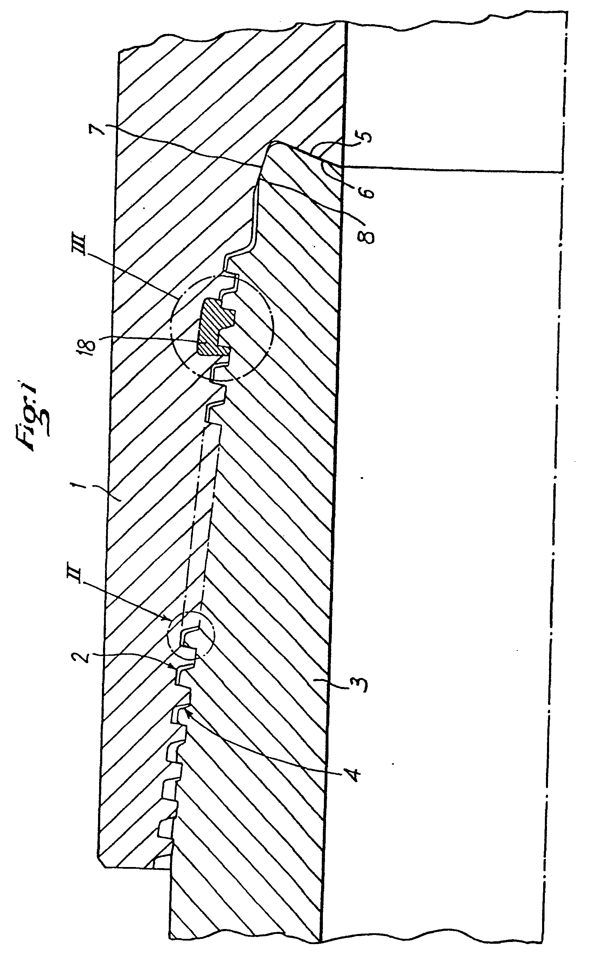

On a représenté sur la figure 1 une demi vue en coupe d'un joint conforme à l'invention.

Ce joint est constitué par une élément femelle, ou manchon 1 qui comporte un filetage conique interne 2 dans lequel s'engage l'élément mâle 3 grâce à un filetage conique externe 4 correspondant.

Une butée 5 disposée à l'intérieur de l'element femelle sert d'appui à l'extrémité 6 de l'élément mâle pour limiter le vissage, tandis qu'un couple de surfaces 7 et 8 disposées respectivement sur l'élément femelle et l'élément mâle assure une étanchéité du joint de type métal-métal.

On voit sur la figure 2, comment le filet 9 de l'élément mâle 3 s'engage dans un évidement 10 de l'élément femelle 1. Compte-tenu de l'existence de la butée de limitation de vissage 5, et de la conicité de filetages, le flanc 11 du filet 9 se trouve fortement appliqué axialement contre le flanc 12 de l'évidement 10. De même, le fond du filet 13 de l'élément mâle 3 est fortement appliqué radialement contre le sommet de filet 14 de l'élément femelle.

Dans le mode de réalisation représenté, ce sont des sommets des filetages femelles qui prennant appui contre les creux des filetages mâles, mais cela pourrait être l'inverse, si lors de l'usinage, on avait réalisé la hauteur des filets 9 supérieure à celle de évidements 10.

Dans ces conditions, si l'on considère le pourtour complet d'un filet de l'élément mâle, on constate que sur les fonds de filet 13 et les flancs de filet 11, l'élément femelle s'applique fortement contre l'élément mâle ce qui assure l'ètanchéité dans cette zone. Par contre, au niveau des sommets 15 et du flanc arrière 16 du filet 9 de l'élément mâle, il existe obligatoirement un jeu entre l'élément femelle et l'élément mâle. Ce jeu représenté en 17 sur la figure 2 fait qu'il n'a été jusqu'alors pas possible d'obtenir une étanchéité satisfaisante au niveau des filetages.

On comprend en effet que ce jeu qui est représenté sur la figure 2 au niveau d'un filet, se poursuit hélicoïdalement tout le long du filetage entre l'élément mâle et l'élément femelle.

Le ganissage de matière synthétique 18 que l'on voit sur la figure 1 a precisément pour objet d'interrompre ce chemin de fuite en obturant complètement ce jeu au niveau d'au moins un pas de filetage.

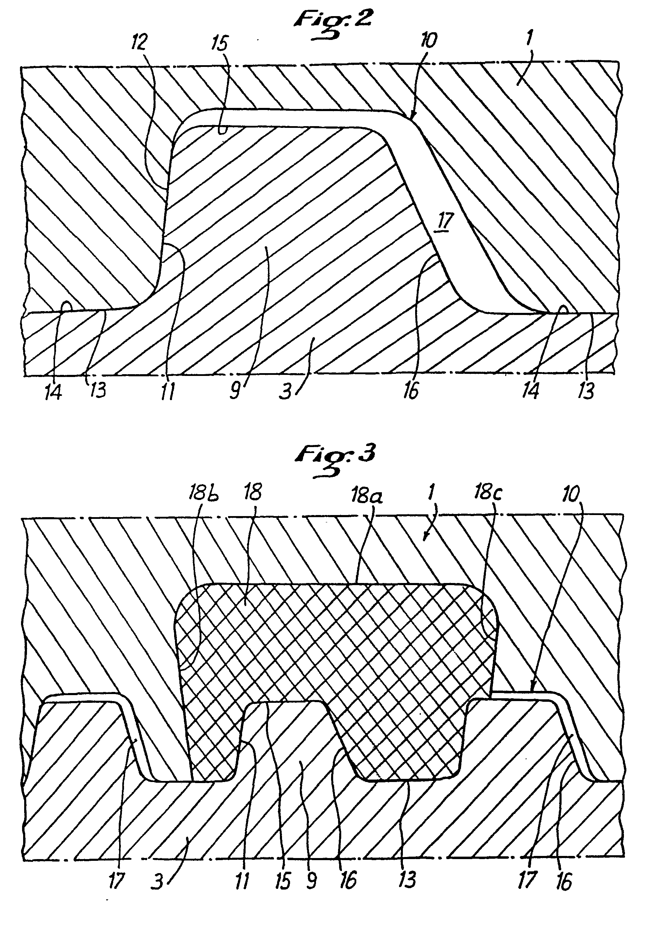

On a représenté sur la figure 3, à plus grande échelle, la partie III de la figure 1.

On retrouve sur la figure 3 la gorge 18 munie cu garnissage de matière synthétique. On remarque que le fond de la gorge 18a qui est sensiblement parallèle au filetage, se trouve, conformément à l'invention, au-delà des creux de filets de l'élément qui contient la gorge. De préférence la profondeur de la gorge est sensiblement égale à environ deux fois la hauteur des filets.

Conformément à un mode de réalisation préferé de l'invention, les bords latéraux 18b et 18c de la gorge sont inclinés de manière à donner à cette dernière une section en forme de queue d'aronde, les surfaces 18a, 18b et 18c étant réunies entre elles par des arrondis.

On voit sur la figure 3 que conformément à l'invention, le garnissage en matière synthétique contenu dans la gorge occupe après vissage la totalité de l'espace libre autour des filetages de l'élément 3.

On voit en particulier que le matière synthétique s'applique de manière continue sur les parties successives 11, 15, 16, 13 etc... du filetage de l'élément 3. Comme indiqué précédemment, la largeur de la gorge et du garnissage en matière synthétique, est supérieure à un pas du filetage de manière à être certain d'obturer le canal de fuite hélicoïdal.

Conformément à l'invention, le pourtour intérieur du garnissage en matière synthétique qui se trouve dans la gorge 18 doit être tel qu'il ne laisse aucun jeu entre lui-même et le filetage de l'autre élément même lorsque le filetage de cet autre élément est réalisé avec les dimensions minimales qu'il peut avoir compte tenu des tolérances d'usinage.

Conformément à l'invention, il est préférable que, quelles que soient les dimensions exactes de l'élément qui est vissé dans l'élément comportant la gorge et le garnissage en matière synthétique (ces variations de dimensions pouvant être dues aux tolérances d'usinage), il s'exerce une légère compression entre le garnissage en matière synthétique et le filetage de l'autre élément.

On obtient de cette mainière, une étanchéité au niveau des filetages qui est de bonne qualité et qui reste fiable, même après de nombreux vissages et dèvissages du joint, avec interchangement des éléments.

Cette étanchéité selon l'invention peut être, bien entendu, utilisée seule ou en association avec d'autres ètanchéités, telle qu'une étanchéité métal-métal qui est obtenue sur les surfaces 7 et 8 du joint représenté sur la figure 1.

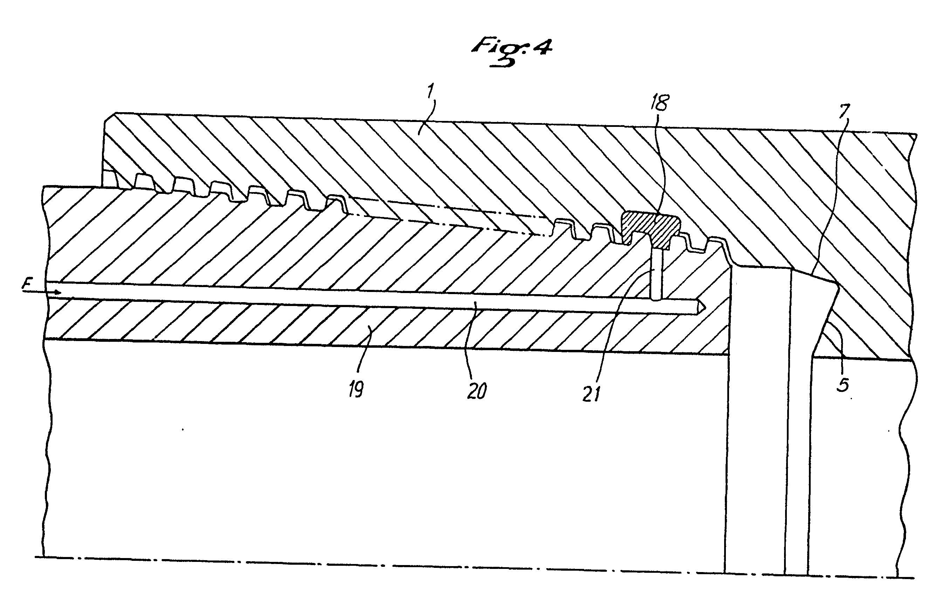

On a représenté sur la figure 4 un dispositif qui permet de mettre en oeuvre un des procédés permettant d'obtenir le garnissage en matière synthétique conforme à l'invention.

Cette figure 4 représente le même élément femelle 1 que celui de la figure 1.

Un mandrin 19 qui a été vissé dans l'élément femelle 1 comporte un filetage tronconique externe dont la forme correspond aux dimensions minimales possibles pour l'autre élément métallique, compte-tenu des tolérances d'usinage du filetage. Dans le cas où l'on désire obtenir systématiquement une légère compression de la matière synthétique dans la gorge 18, les dimensions du filetage du mandrin 19 sont légèrement inférieures aux dimensions minimales autorisées par les tolérances de fabrication du filetage du joint.

Le mandrin 19 comporte une série de canaux longitundinaux 20 percés sur sa périphérie, lesquels sont reliés par des canaux radiaux 21 à l'espace de la gorge 18.

Pour réaliser la garniture en matière synthétique, après avoir appliqué un produit anti-adhésif sur la surface correspondante des filetages du mandrin 19, on visse ce dernier dans l'élément femelle 1, puis on injecte la matière synthétique par les canaux 20 de manière à garnir l'espace de la gorge 18.

Après polymérisation de la matière synthétique, on procédé au dévissage du mandrin et on obtient le garnissage de matière synthétique conforme à l'invention, qui lorsque l'on vissera un quelconque élément mâle dans l'élément femelle 1, conférera une étanchéité parfaite et répétitive au niveau des filetages.

Selon un autre procédé de fabrication, l'on applique dans la gorge 18 une quantité suffisante de matière synthétique que l'on fait polymériser, puis lorsque la matière synthétique est suffisamment dure, on procède mécaniquement à son usinage pour lui conférer le profil du filetage de l'élément mâle, avec des dimensions qui correspondent à ce qui a été exposé précédemment.

La matière plastique utilisée est un composé d'uréthane connu sous le nom de Polathane XPE.

Il est bien entendu que les modes de réalisation qui ont été décrits ci-dessus ne présentent aucun caractère limitatif et qu'ils pourraient recevoir toutes modifications désirables sans sortir pour cela du cadre de l'invention.

En particulier, il est clair que, bien que dans les modes de réalisation décrits, ce soit l'élément femelle qui est muni de la gorge contenant la matière synthétique, il est également possible de réaliser sur l'élément mâle la gorge contenant la matière synthétique.

Il va également de soi, que la gorge peut être placée en différents endroits du filetage et que l'on pourrait même éventuellement réaliser deux gorges garnies de matière synthétique selon l'invention.

Enfin, il est clair que le dispositif d'étanchéité selon l'invention peut être utilisé seul ou en association avec d'autres dispositifs d'étanchéité par exemple du type métal-métal et que les joints auxquels est appliquée l'invention peuvent comporter des butées de limitation de vissage ou n'en point comporter.

De même, l'invention peut s'appliquer à des joints dont les filetages sont tronconiques ou à des joints dont les filetages sont cylindriques.

Il serait enfin possible de réaliser une gorge sur l'élément femelle et une gorge sur l'élément mâle, ces deux gorges se correspondant de manière à ce que l'étanchéité soit réalisée au riveau des deux garnissages en matière synthétique.

**Revendications**

1. Joint fileté entre deux tubes d'acier utilisable en particulier pour l'industrie pétrolière, du type dans lequel l'élément mâle (3) et l'élément femelle (1) sont réunis par des filetages (4), tandis qu'une partie (11, 13) de la surface du contour de chaque filet est fortement appliquée à l'état vissé sur le filetage (12, 14) de l'autre élément, dans lequel un au moins de éléments du joint comporte sur son filetage, sur une distance axiale correspondant à la longueur d'au moins un pas de filetage au moins une gorge (18) dont le profondeur est supérieure à la hauteur des filets et qui contient un organe d'étanchéité, caractérisé par le fait que cet organe, qui fait corps avec l'élément, est constitué par un garnissage en matière synthetique conformé avant vissage, dont le volume et la forme correspondent sensiblement au volume et à la forme du jeu (17) qui existerait à l'état vissé entre cet élément du joint (1) et l'autre élément du joint (3) dont les dimensions seraient à la limite des tolérances d'usinage qui permet le plus grand jeu possible du joint à l'état monté, le garnissage en matière synthétique ne subissant aucune déformation permanents notable lors des vissages successifs.

2. Joint selon la revendication 1, caractérisé par le fait que les dimensions du garnissage en matière synthétique excèdent légèrement les dimensions correspondant à la limite des tolérances d'usinage qui permet le plus grand jeu possible du joint à l'état monté.

3. Joint selon l'une quelconque des revendications précédentes, caractérisé par le fait que le ou lesdites gorges (18) ont une section en forme de queue d'aronde.

4. Joint selon l'une quelconque des revendications précédentes, caractérisé par le fait que le garnissage en matière synthétique adhère à la surface de la gorge correspondante (18).

5. Joint selon l'une quelconque des revendications précédentes, caractérisé par le fait qu'il comporte une gorge unique munie du garnissage, celle-ci étant située sur le filetage de l'élément femelle (1) au voisinage de l'extrémité de l'élément mâle (3).

6. Joint selon l'une quelconque des revendications précédentes, caractérisé par le fait que un l'utilise comme matière synthétique des élastomères d'uréthane tels que par exemple du polathane XPE ou du RIM 160 à structure microcellu- laire, des polycarbonates, des polyoléfines, ou du polyamide.

7. Procédé pour réaliser le garnissage du joint selon l'une quelconque des revendications précédentes, caractérisé par le fait que l'on visse sur, ou dans, l'élément qui comporte la ou les gorges (18) un mandrin (19) comportant un filetage dont les dimensions correspondent aux limites minimales de tolérance de l'élément de joint qui doit être vissé dans, ou sur, l'élément qui comporte la ou les gorges (18) ou dont les dimensions sont légèrement inférieures à ces dimensions minimales, et qu'à l'aide d'une pluralité de canaux (20, 21) disposés dans le mandrin, on injecte au niveau de la ou des gorges (18) la matière synthétique qui en se fixant à l'intérieur de la gorge correspondante après polymérisation, réalise le garnissage en matière synthétique.

8. Procédé pour réaliser un joint selon l'une quelconque des revendications 1 à 6 caractérisé par le fait que l'on applique dans la ou les gorges (18) réalisée dans l'un des éléments (1) du joint, une masse suffisante de matière synthétique dont on provoque la polymérisation, puis qu'on usine cette matière synthétique de manière à lui donner une forme, qui compte-tenu de la compression que l'on désire réaliser, correspond exactement au contour de filetage de l'autre élément dont les dimensions correspondent aux tolérances minimales de fabrication.

**Patentansprüche**

1. Schraubverbindung für zwei Stahlrohre, insbesondere zur Anwendung in der Erdölindustrie, bei der das Einschraubelement (3) und das Aufnahmeelement (1) durch Gewinde (4) miteinander verbunden sind, während ein Teil (11, 13) der Oberfläche des Profils eines jeden Gewindes im verschraubten Zustland auf dem Gewinde (12, 14) des anderen Elements fest angepreßt ist, bei dem mindestens eines der Verbindungselement auf seinem Gewinde in axialer Entfernung, die zumindest der Länge einer Gewindesteigung entspricht, mindestens, eine Rille (18) aufweist, deren Tiefe die Höhe der Gewindegänge übersteigt, und die ein Abdichtungsorgan umfaßt, dadurch gekennzeichnet, daß dieses Organ, das mit dem Element verbunden ist, aus einer vor dem Schraubvorgang angepaßten Auskleidung aus Synthetikmaterial gibildet wird, deren Volumen und Form in etwa dem Volumen und der Form des Spiels (17) entsprechen, das in geschraubtem Zustand zwischen diesem Element der Verbindung (1) und dem anderen Element (3) der Verbindung existieren würde, dessen Maße bei den zulässigen Toleranzgrenzwerten liegen, die das größmögliche Spiel der Verbindung im zusammengesetzten Zustand ermöglichen, wobei die Auskleidung aus Synthetikmaterial bei den aufeinanderfolgenden Schraubvorgängen keine bemerkenswerte Dauerverformung erleidet.

2. Verbindung nach Anspruch 1, dadurch gekennzeichnet, daß die Maße der Synthetikauskleidung die Maße entsprechend den zulässigen Toleranzgrenzwerten leicht übersteigen, die das größtmögliche Spiel der Verbindung im zusammengesetzten Zustand ermöglicht.

3. Verbindung nach einem der vorstehenden Ansprüche dadurch gekennzeichnet, daß die Rille oder die Rillen (18) einen Querschnitt in Schwalbenschwanz-Form aufweisen.

4. Verbindung nach einem der vorstehenden Ansprüche dadurch gekennzeichnet, daß die Synthetikauskleidung auf der Oberfläche der entsprechenden Rille (18) haflet.

5. Verbindung nach einem der vorstehenden Ansprüche dadurch gekennzeichnet, daß sie eine alleinige, mit der Auskleidung versehene Rille aufweist, die auf dem Gewinde des Aufnahmeelements (1) neben dem äußeren Ende des Einschraubelements (3) liegt.

6. Verbindung nach einem der vorstehenden Ansprüche dadurch gekennzeichnet, daß als Synthetikmaterial Urethanelastomere wie zum Beispiel Polathan XPE oder RIM 160 mit Mikrozellenstruktur, Polycarbonate, Polyolefine oder Polyamid verwendet werden.

7. Verfahren zur Ausführung der Auskleidung der Verbindung nach einem der vorstehenden Ansprüche, dadurch gekennzeichnet, daß auf oder in das Element, das die Rille oder die Rille(n) (18) aufweist, ein Dorn (19) mit einem Gewinde geschraubt wird, dessen Maße den unteren Toleranzgrenzwerten des Verbindungselements entsprechen, das in oder auf das Element mit der Rille oder den Rille(n) (18) geschraubt wird, oder dessen Maße diese unteren Maße leicht unterschreiten, und daß mittels mehrerer im Dorn angeordneter Kanäle (20, 21) im Bereich der Rille oder Rille(n) (18) das Synthetikmaterial eingespritzt wird, das nach Polymerisation im Inneren der entsprechenden Rille fest wird und die Synthetikauskleidung bildet.

8. Verfahren zur Ausführung einer Verbindung nach einem der Ansprüche 1 bis 6, dadurch gekennzeichnet, daß in der oder den in einem der Elemente (1) der Verbindung geformten Rille(n) eine ausreichende Masse an Synthetikmaterial aufgetragen wird und eine Polymerisation stattfindet, und daß dieses Synthetikmaterial anschließend so bearbeitet wird, daß es eine Form erhält, die unter Berücksichtigung der gewüngschten Kompression genau dem Umriß des Gewindes des anderen Elements entspricht, dessen Maße den unteren Herstellungstoleranzgrenzwerten entsprechen.

**Claims**

1. A threaded joint between two steel tubes which can be used in particular for the petroleum industry, of the type in which the male element (3) and the female element (1) are connected by threaded portions (4), whilst one part (11, 13) of the surface of the contour of each thread contour of each thread is, in the screwed-together state, applied hard to the threaded portion (12, 14) of the other element, in which at least one of the elements of the joint comprises on its threaded portion, over an axial distance corresponding to the length of at least one thread pitch, at least one groove (18), the depth of which is greater than the height of the threads, and which comprises a sealing member, characterised in that this member, which forms an integral part of the element, is composed of a lining of synthentic material formed before the screwing operation and whose volume and shape correspond substantially to the volume and shape of the play (17) which would exist in the screwed-together state between this element of the joint (1) and the other element of the joint (3), the dimensions of which would correspond to the machining tolerance limit which permits the greatest possible play of the joint in the assembled state, the lining of synthetic material undergoing no appreciable permanent deformation during the successive screwing operations.

2. A joint as claimed in claim 1, characterised in that the dimensions of the lining of synthetic material slightly exceed the dimensions corresponding to the machining tolerance limit which permits the greatest possible play of the joint in the assembled state.

3. A joint as claimed in any one of the preceding claims, characterised in that the groove or grooves (18) have a dove-tail shaped cross-section.

4. A joint as claimed in any one of the preceding claims, characterised in that the lining of synthetic material adheres to the surface of the corresponding groove (18).

5. A joint as claimed in any one of the preceding claims, characterised in that it comprises one single groove provided with the lining and situated on the threaded portion of the female element (1) in the vicinity of the end of the male element (3).

6. A joint as claimed in any one of the preceding claims, characterised in that the synthetic material which is used consists of elastomers of urethane, such as for example polathane XPE or RIM 160 of microcellular structure, polycarbonates, polyolefines, or polyamide.

7. A process for the construction of the lining of the joint as claimed in any one of the preceding claims, characterised in that onto or into the element which comprises the groove or grooves (18) is screwed a mandrel (19) comprising a threaded portion, the dimensions of which correspond to the minimum tolerance limits of the joint element which must be screwed into or onto the element which comprises the groove or grooves (18) or the dimensions of which are slightly smaller than said minimum dimensions, and that by means of a plurality of channels (20, 21) arranged in the mandrel, the synthetic material is injected at the level of the groove or grooves (18) and attaches itself to the interior of the corresponding groove after polymerisation so as to form the lining of synthetic material.

8. A process for the construction of a joint as claimed in any of the claims 1 to 6, charcterised in that a sufficient mass of synthetic material is applied into the groove or grooves (18) formed in one of the elements (1) of the joint and is caused to polymerise, whereupon this synthetic material is machined so as to provide it with a shape which, taking into account the desired compression, corresponds exactly to the contour of the threaded portion of the other element, the dimensions of which correspond to the minimum production tolerances.

Fig.1

## Fig.2

12  15  10  1

17

14  13  11  9  3  16  14  13

## Fig.3

18b  18  18a  1  18c  10

17  3  11  15  9  16  13  17  16

Fig. 4